**Europäisches Patentamt**

**European Patent Office**

**Office européen des brevets**

(19)

(11) Veröffentlichungsnummer: **0 123 219**
A2

(12) # EUROPÄISCHE PATENTANMELDUNG

(21) Anmeldenummer: **84104096.7**

(22) Anmeldetag: **12.04.84**

(51) Int. Cl.³: **B 60 R 21/10**

(30) Priorität: **15.04.83 DE 3313810**

(43) Veröffentlichungstag der Anmeldung:
**31.10.84 Patentblatt 84/44**

(84) Benannte Vertragsstaaten:
**DE FR GB SE**

(71) Anmelder: **AUTOFLUG GMBH**
**Industriestrasse 10 Postfach 1180**
**D-2084 Rellingen(DE)**

(72) Erfinder: **Butenop, Klaus**
**Obendeich 29**
**D-2209 Herzhorn(DE)**

(74) Vertreter: **Glawe, Delfs, Moll & Partner Patentanwälte**
**Postfach 26 01 62 Liebherrstrasse 20**
**D-8000 München 26(DE)**

(54) **Sicherheitsgurtaufroller.**

(57) Bei einem Sicherheitsgurtaufroller mit einem Sperrglied, das mittels einer Steuerscheibe aus einer sperrfreien Ruhestellung in eine Stellung anfänglichen Eingriffs in ein Gegensperrglied bewegbar ist und aus dieser Anfangseingriffsstellung in seine Sperrstellung mit maximalem Eingriff selbsttätig durch die zu sperrende Relativdrehung des Gegensperrelements überführbar ist, wobei die mit einem Zahnkranz zum Zusammenwirken mit einem Sensor verbundene Steuerscheibe über eine Steuerkurve mit dem Sperrglied zusammenwirkt, wird erfindungsgemäß eine Verringerung des für die Entriegelung erforderlichen Rückdrehwinkels der Welle erreicht, daß die Steuerkurve im Anschluß an den ersten, die Umsteuerung des Sperrglieds aus der Ruhestellung in die Anfangsangriffsstellung bewirkenden ersten Kurvenabschnitt einen zweiten Kurvenabschnitt mit solcher Richtung aufweist, daß die Bewegung des Sperrglieds aus der Anfangseingriffsstellung in die Sperrstellung eine Rückstellung der Sperrscheibe bewirkt.

Fig.1

RICHARD GLAWE
DR.-ING

WALTER MOLL
DIPL.-PHYS DR RER. NAT.
ÖFF BEST DOLMETSCHER

KLAUS DELFS
DIPL.-ING

ULRICH MENGDEHL
DIPL.-CHEM DR. RER NAT

HEINRICH NIEBUHR
DIPL.-PHYS. DR. PHIL HABIL

8000 MÜNCHEN 26
POSTFACH 162
LIEBHERRSTR. 20
TEL. (0 89) 22 65 48
TELEX 5 22 505 SPEZ
TELECOPIER (0 89) 22 39 38

2000 HAMBURG 13
POSTFACH 25 70
ROTHENBAUM-
CHAUSSEE 58
TEL. (040) 4 10 20 08
TELEX 21 29 21 SPEZ

HAMBURG

Autoflug GmbH,

Rellingen

Sicherheitsgurtaufroller

p 11146/84

D/fi/bo/GK

## Beschreibung

Die Erfindung bezieht sich auf einen Sicherheitsgurt-Aufroller mit einem Sperrglied, das mittels einer Steuerscheibe aus einer sperrfreien Ruhestellung in eine Stellung anfänglichen Eingriffs in ein Gegensperrglied bewegbar ist und aus dieser Anfangseingriffsstellung in seine Sperrstellung mit maximalen Eingriff selbsttätig durch die zu sperrende Relativdrehung des Gegensperrelements überführbar ist, wobei die mit einem Zahnkranz zum Zusammenwirken mit einem Sensor verbundene Steuerscheibe über eine Steuerkurve mit dem Sperrglied zusammenwirkt.

Es ist ein Sicherheitsgurt-Aufroller bekannt (DE-GM 74 25 531), dessen Sperrglied an einem mit der Wickelwelle fest verbundenen Exzenter gelagert ist und daher ebenfalls mit der Wickelwelle umläuft. Es trägt nach außen gewendete Sperrzähne und wird von einem gehäusefesten, als Zahnkranz ausgebildeten Gegensperrglied umgeben. Im sperrfreien Ruhezustand nimmt es eine radial

. . .

innere Lage ein, in welcher seine Sperrzähne radialen Abstand von den Zähnen des Gegensperrglieds aufweisen. Axial neben dem Sperrglied ist auf der Welle die Steuerscheibe/gelagert, zentrisch die über eine Steuerkurve mit dem Sperrglied zusammenwirkt. Die Steuerkurve kann als Schlitz in einem der beiden Teile angeordnet sein, während der andere einen in den Schlitz eingreifenden Zapfen trägt. Die Steuerscheibe ist zwar gegenüber der Welle leicht verdrehbar und durch eine zwischen ihr und der Welle wirkende Feder wird sie jedoch in dem Drehsinn beaufschlagt, der der Abwickelrichtung des Gurts entspricht. Die Steuerkurve ist so angeordnet, daß sie das Sperrglied unter der Federvorspannung der Steuerscheibe radial nach innen zieht. Im Zusammenwirken mit der Federvorspannung legt demnach die Steuerkurve für die Steuerscheibe eine Ruhestellung fest, in der die Steuerscheibe mit der Wickelwelle drehverbunden ist. Wird die Steuerscheibe aus dieser Ruhestellung entgegen der Federspannung gegenüber der Wickelwelle verdreht, so verschiebt sich die Steuerkurve gegenüber dem zugehörigen Zapfen und das Sperrglied wird aus seiner Ruhestellung mit seinen Sperrzähnen nach außen geführt und gelangt dabei in Eingriff mit den Gegensperrzähnen. Diese Relativdrehung der Steuerscheibe kann - außer einer/Trägheitswirkung, die hier eigenen ohne Belang ist - durch einen Sensor bewirkt werden, der in einen am Umfang der Steuerscheibe vorgesehenen Zahnkranz eingreift, dessen Zähne dieselbe Teilung wie diejenigen des Gegensperrglieds aufweisen. Dadurch wird bewirkt, daß bei einem Eingriff des Sensors in den Zahnkranz die Zähne des Sperrelements sich in einer vorbestimmten, für den Eingriff günstigen Winkelanordnung zu den Zähnen des Gegensperrelements befinden, Man hat es daher in der Hand, durch geeignete Aus- um z.B. Zahn-auf-Zahn-Blockierung zu vermeiden. bildung der Steuerkurve den Weg der Sperrzähne des Sperrelements gegenüber den zugeordneten Zähnen des Gegensperrelements so auszurichten, wie einem dies im Hinblick auf einen zuverlässigen Eingriff am günstigsten erscheint.

...

**0123219**

Für die Eingriffsbewegung des Sperrglieds und für die Wahl
seines Eingriffwegs gelten dabei folgende Gesichtspunkte.
Die geometrischen Verhältnisse am Sperrelement und am Gegensperrelement sind so gewählt, daß diese Teile selbstsperrend
sind. Das heißt, daß das Sperrelement durch die zu sperrende
Relativdrehung zwischen den beiden Elementen zu um so tieferem
Sperreingriff gedrängt wird, sobald seine Zähne die Zahnflanken des Gegensperrelements erreicht haben. Solange der
Zahneingriff noch nicht erreicht ist, wird das Sperrglied
durch die Steuerscheibe mittels der Steuerkurve geführt.
Der Eingriffsweg des Sperrelements vollzieht sich demnach in
zwei Phasen. In der ersten Phase wird es durch die Steuerkurve
aus dem sperrfreien Ruhezustand in eine Zwischenstellung überführt, in welcher es in das Gegensperrelement eingreift bzw.
die Zahnflanken sich berühren. In der zweiten Phase gleiten
die Zähne des Sperrglieds aufgrund der selbstsperrenden Geometrie im Sinne zunehmender Sperrung an den Zahnflanken des
Gegensperrglieds entlang bis in die Sperrstellung, die durch
maximalen Eingriff gekennzeichnet ist. Um unabhängig von den
Herstellungstoleranzen stets eine sichere Verriegelung zu erhalten, hat man die Steuerkurve bislang so bemessen, daß der
Eingriffsweg der Zähne des Sperrglieds in der ersten Phase
weit zwischen die Gegensperrzähne nahe an die Sperrstellung
heran führte, bevor sie deren Flanken erreichten und damit
die Eingriffsbewegung in die zweite Phase übergeleitet wurde.

Die Eingriffsbewegung des Sperrglieds hat zur Voraussetzung,
daß ein Haltezahn des Sensors in den Zahnkranz der Steuerscheibe eingreift. Bei den bekannten Gurtaufrollern bleibt
dieser Eingriff in der Regel erhalten, bis das Sperrglied
nach dem Lösen der Sperrung wieder in seine sperrfreie Ruhelage zurückgekehrt ist, nachdem also beide Phasen der Sperr-

...

- 4 -

bewegung in umgekehrter Richtung bis zum Ende wieder durchlaufen sind. Dann erst kann nämlich die Steuerscheibe sich
ein wenig zurückdrehen, um den Haltezahn des Sensors freizugeben. Der Benutzer muß daher den Gurt um eine entsprechende
Strecke in den Aufroller zurücklaufen lassen, um die Entriegelung
zu erreichen. Es gibt Anwendungsfälle, in denen man diese
Strecke abzukürzen wünscht, beispielsweise bei Gurtaufrollern,
die in eine umklappbare Rückenlehne eingebaut sind, da hier
sehr wenig freie Gurtlänge zum Entriegeln zur Verfügung steht.

Der Erfindung liegt daher die Aufgabe zugrunde, einen Sicherheitsgurt-Aufroller der eingangs genannten Art zu schaffen,
der die Entriegelung mit geringerer freier Gurtlänge gestattet.

Die erfindungsgemäße Lösung besteht darin, daß die Steuerkurve
im Anschluß an den ersten, die Umsteuerung des Sperrglieds aus
der Ruhestellung in die Anfangseingriffsstellung bewirkenden ,
ersten Kurvenabschnitt einen zweiten Kurvenabschnitt mit umgekehrten Übersetzungssinn aufweist, derart, daß die Bewegung
des Sperrglieds aus der Anfangseingriffsstellung in die
Sperrstellung eine Rückstellung der Sperrscheibe bewirkt.

Mit anderen Worten wird die zweite Phase der Eingriffsbewegung
des Sperrglieds, in der dies mit großer Kraft durch die relative
Rotationsbewegung der beiden Sperrglieder bewegt wird,
dazu benutzt, die Steuerscheibe gegen deren Federwirkung zurückzudrehen, indem die Steuerkurve in ihrem dieser Bewegungsphase zugeordneten Abschnitt entsprechend geformt wird. Diese
Steuerkurvenform zeichnet sich dadurch aus, daß sich unter
Berücksichtigung der Bewegungsrichtung des Sperrglieds, die
diesem durch die Form der zusammenwirkenden Zähne aufgezwungen wird, eine Sperrscheibenbewegung ergibt, die der
Sperrscheibenbewegung in der ersten Sperrbewegungshpase entgegengesetzt ist. Dies hat zur Folge, daß der Zahnkranz am

...

Umfang der Sperrscheibe den Haltezahn des Sensors freigibt.
Daraus wiederum ergibt sich für die Lösebewegung, daß die
Entriegelung bereits dann eintritt, wenn die Zähne der zusammenwirkenden Sperrglieder außer Eingriff gelangt sind.
Dafür genügt im Vergleich mit bekannten Aufrollern etwa
der halbe Rückdrehwinkel der Wickelwelle. Entsprechend
halbiert wird auch die zum Entriegeln in den Aufroller
zurückzuführende freie Gurtlänge.

Am zweckmäßigsten ist die Anwendung der Erfindung bei dem
Typ von Sicherheitsgurt-Aufrollern, der oben zur Charakterisierung des Standes der Technik beschrieben wurde. Jedoch
läßt sich der Erfindungsgedanke auch bei solchen Sicherheitsgurt-Aufrollern anwenden, deren Sperrglied zum Eingriff von
außen nach innen  bewegt werden muß und/oder bei denen das
Gegensperrglied mit der Wickelwelle umläuft.

Die Erfindung wird im folgenden näher unter Bezugnahme auf
die Zeichnung erläutert, die ein vorteilhaftes Ausführungsbeispiel veranschaulicht. Darin zeigen:

Fig. 1        eine Ansicht der Sperrmechanik nach Abnahme
              der Steuerscheibe,

Fig. 2        eine im Maßstab vergrößerte Darstellung des
              Eingriffswegs der Sperrzähne  und

Fig. 3        eine der Fig. 1 entsprechende Darstellung bei
              teilweise weggebrochener Steuerscheibe.

Der Gurtaufroller, der - soweit hier nicht beschrieben - von
der in dem DE-GM 74 25 531 näher erläuterten Art sein kann,
weist ein Gehäuse mit Gehäuseseitenwand 1 und eine Wickelwelle auf,

. . .

von der ein konzentrischer Endzapfen 2 sowie ein starr mit der Wickelwelle verbunder Exzenterzapfen 3 durch die Seitenwand 1 hindurchtreten. Ein innen verzahnter Kranz 4 ist, wie bei 5 durch Schrauben angedeutet, fest und konzentrisch zu der Wickelwelle mit der Seitenwand 1 verbunden.

Auf dem Exzenterzapfen 3 ist das Sperrglied 6 gelagert, das in der Zeichnung der besseren Übersicht halber durch Punktierung hervorgehoben ist. Mit durchgezogenen Linien ist es in seiner sperrfreien Ruhestellung gezeichnet, in welcher seine Sperrzähne 7 radialen Abstand von den Sperrzähnen 8 des Kranzes 4 aufweisen, der das Gegensperrglied bildet. Bei 9 trägt das Sperrglied einen Steuerzapfen, der zum Zusammenwirken mit der Steuerkurve der Steuerscheibe bestimmt ist.

Mit strichpunktierten Linien ist das Sperrglied in der von seiner Ruhestellung nächsten erreichbaren Sperrstellung gezeichnet. Der Übergang des Sperrglieds in die Sperrstellung setzt eine Drehung der Wickelwelle in Pfeilrichtung entsprechend einer Zugbewegung des Gurts 10 und eine Führung des Zapfens 9 etwa in Pfeilrichtung 11 voraus, wobei die Spitze des ersten Verriegelungszahns eine Bewegung etwa im Sinne des Pfeils 12 vollzieht.

Der Steuerung des Sperrglieds dient die Sperrscheibe 13, die am Umfang einen Zahnkranz 14 trägt, der zum Zusammenwirken mit dem Haltezahn 15 des Sensors 16 bestimmt ist. Im Ruhezustand ist der Haltezahn 15 radial von dem Zahnkranz 14 entfernt, während er beim Auftreten einer starken Verzögerung oder beim Kippen des Fahrzeugs / oder der Rückenlehne in die gestrichelt gezeichnete Lage gelangt, in der er in den Zahnkranz 14 eingreift und dadurch die Steuerscheibe 13 an einer Drehung im Sinne des im Wellenbereich eingezeichneten Pfeils hindert.

Die Steuerscheibe 13 ist drehbar auf dem Wellenzapfen 2 gelagert und mit diesem durch eine bei 17 lediglich schematisch
angedeutete Feder verbunden, die sie mit einer nachgiebigen
Kraft in Pfeilrichtung beaufschlagt.

Die Steuerscheibe 13 enthält die Steuerkurve 18, in die der
Steuerzapfen 9 des Sperrglieds 6 eingreift. Unter dem Einfluß
der Federkraft 17 will sich die Steuerscheibe im Gegenuhrzeigersinn drehen, wodurch der Steuerzapfen 9 in die strichpunktiert angedeutete Ruhelage im achsnäheren Ende der Steuerkurve 18 gelangt, die der sperrfreien Ruhestellung des Sperrglieds 6 entspricht. In dieser Ruhestellung können sich das
Sperrglied 6 und die Steuerscheibe 13 mit der Welle 2 drehen,
so lange der Zahnkranz 14 von dem Haltezahn 15 des Sensors 16
frei ist. Greift dieser Haltezahn ein, so wird bei einer Zugbewegung des Gurts 10 und einer entsprechenden Abwickeldrehung
der Welle 2 die Steuerscheibe 13 entgegen der Federkraft 17
zurückgehalten, während sich die Welle 2 mit dem Sperrglied 6
und dem Zapfen 9 weiter in Pfeilrichtung bewegt. Dadurch wird
der Zapfen 9 in der Steuerkurve 18 nach außen geführt und seine
Sperrzähne 7 gelangen in Eingriff mit den Sperrzähnen 8 des
Gegensperrglieds 4. Insoweit kann die Anordnung als bekannt
betrachtet werden.

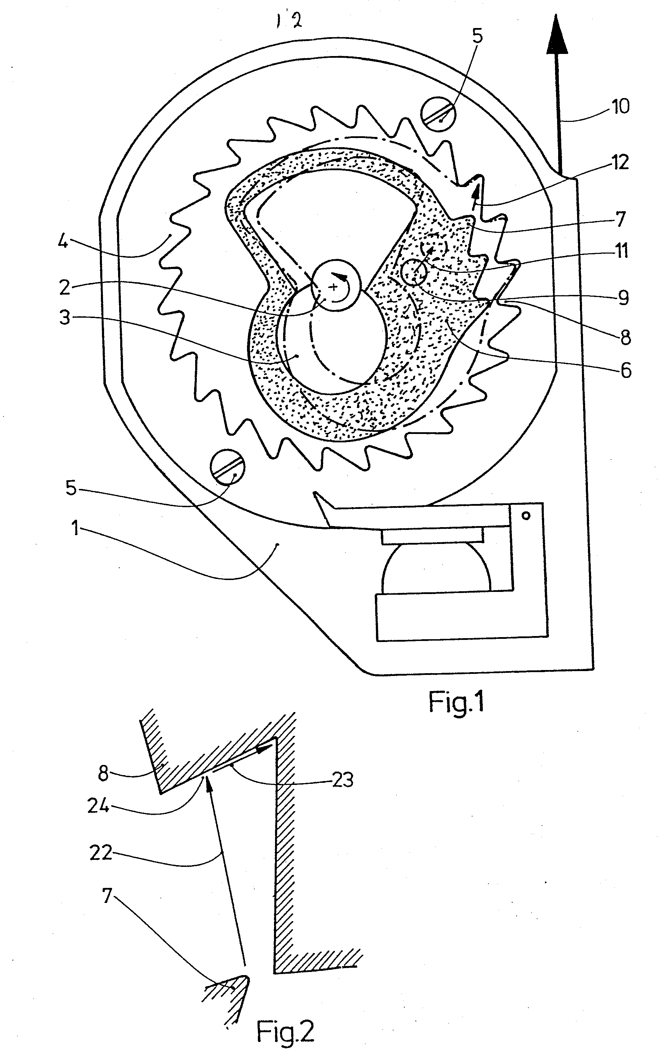

Die Steuerkurve 18 besteht aus zwei Abschnitten 20, 21, von
denen der radial innere Abschnitt 20 einen kleineren Winkel
mit dem Radius/einschließt als der äußere Abschnitt 21. Der
vom Mittelpunkt der Scheibe
innere Abschnitt 20 entspricht in seinem Verlauf etwa dem der
bekannten Steuerkurven. Er ist so ausgelegt, daß er die Zähne
7 des Sperrglieds bis in Kontakt mit den rückwärts gewandten
Flanken der Gegensperrzähne 8 bringt, jedoch noch nicht in
die Sperrstellung mit maximaler Eingriffstiefe. Dieser dem
Kurvenabschnitt 20 zugeordnete Abschnitt des Eingriffswegs der
Sperrzähne 7 ist angedeutet durch den Pfeil 22 in Fig. 2.

...

**0123219**

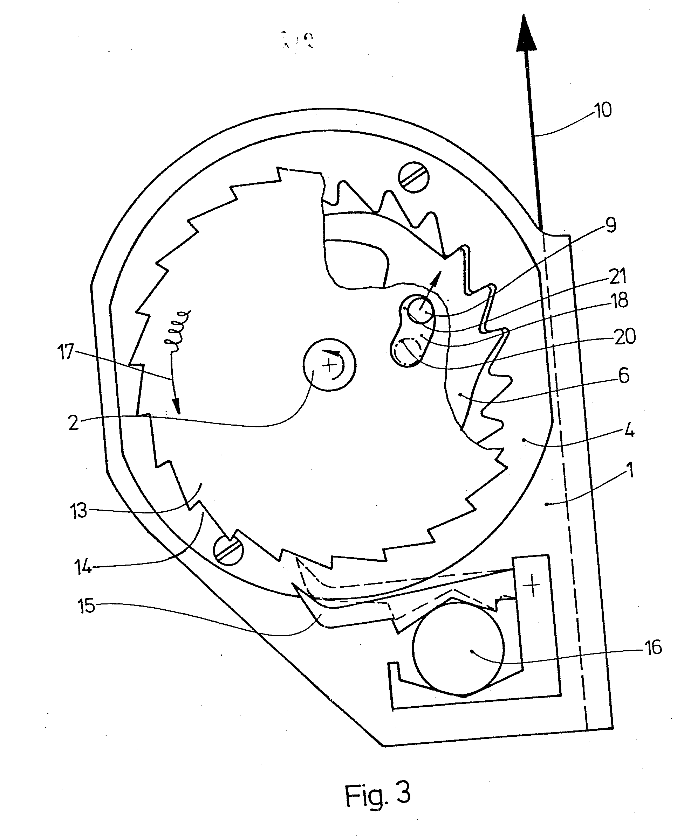

Anschließend sorgt die selbstsperrende Geometrie der Anordnung dafür, daß die Sperrzähne 7 im Sinne des Pfeils 23 weiter bis in die Sperrstellung maximaler Eingriffstiefe gleiten. Innerhalb dieser zweiten Bewegungsphase beginnt in der Steuerkurve 18 der zweite Kurvenabschnitt 21. Da der Zapfen 9 innerhalb dieses Kurvenabschnitts eine Bewegungsrichtung inne hat, wie sie durch den Pfeil in Fig. 3 angedeutet ist und die einen kleineren Winkel mit dem Radius einschließt als die Richtung des Kurvenabschnitts 21, wird dabei die Steuerscheibe 13 entgegen der Pfeilrichtung 17 zurückgedreht, wodurch der Haltezahn 15, der bislang durch die Federkraft 17 in Eingriff gehalten war, frei wird und abfallen kann.

Während man bislang bemüht war, die Steuerkurve 18 so zu gestalten, daß derjenige Punkt 24 (Fig. 2) bei welchem der erste Verriegelungszahn 7 erstmals Kontakt mit einer Gegenzahnflanke erhält, möglichst nahe der Sperrstellung liegt, um dadurch eine möglichst sichere Verriegelungswirkung zu erhalten, kann es nach der Erfindung zweckmäßig sein, diesen Punkt etwas weiter von der Sperrstellung anzuordnen, um dadurch für die zweite Bewegungsphase, die für die Rückdrehung der Sperrscheibe 13 verantwortlich ist, eine größere wirksame Länge zu erreichen. Andererseits ist es jedoch auch wichtig, daß der Punkt 24 von der nächstgelegenen Zahnspitze einen im Hinblick auf die Fertigungstoleranzen und die Eingriffssicherheit hinreichenden Abstand einhält.

Bei der Entriegelung wird die Welle 2 entgegen der Pfeilrichtung gedreht. Dadurch gleiten die Sperrzähne 7 radial nach innen an den Flanken der Zähne 8 entlang. Die Steuerkurve 18 übt dabei keine Zwangsführung aus, weil sie vom Haltezahn 15 frei ist und sich daher gemäß der jeweiligen Einstellung des Zapfens 9 unter der Wirkung der Feder 17 einstellen kann. Sobald die Sperrzähne 7 die Spitzen der Gegensperrzähne 8 erreicht

...

und diese überwunden haben, fällt das Sperrglied unter der Wirkung der Feder 17 und der Steuerkurve 18 in die sperrfreie Ruhelage zurück. Demnach ist für die Entriegelung nur derjenige Rückdrehwinkel der Welle 2 erforderlich, der die Sperrzähne 7 bis zu den Spitzen der Sperrzähne 8 zurückführt. Das ist etwa die Hälfte des Winkels, der zuvor zur Verriegelung erforderlich war.

Wenn während des Eingriffswegs des Sperrglieds 6 der Zapfen 9 in der Steuerkurve 18 von innen nach außen wandert, liegt er zunächst im Abschnitt 20 an der radial inneren Flanke der Steuerkurve an, die in Fig. 3 links gezeigt ist. Wenn die Sperrzähne 7 erstmalig die flanken der Gegensperrzähne 8 erreicht haben und ihre Bewegung aus der Richtung gemäß Pfeil 22 (Fig. 2) in diejenige gemäß Pfeil 23 übergeht, wechselt der Zapfen 9 in der Steuerkurve 18 die Seite und liegt nun an der radial äußeren Flanke (in Fig. 3 rechts) an, um nun die Steuerscheibe entgegen deren Federbeaufschlagung zurückzudrehen. Zur Vermeidung toten Wegs zwischen den beiden Flanken ist es daher vorteilhaft, das Spiel zwischen dem Zapfen und den Flanken mindestens im Übergangsbereich möglichst klein auszuführen.

Wenn man für die beiden Funktionsphasen jeweils die optimalen Winkel der Steuerkurve wählt, ergibt sich die in Fig. 3 dargestellte, geknickte Ausführung. Jedoch ist es nicht unbedingt erforderlich, daß die beiden Steuerkurvenabschnitte durch einen Knick äußerlich deutlich erkennbar voneinander abgesetzt sind. Vielmehr ist auch ein dradueller Übergang möglich, beispielsweise in Gestalt eines gleichförmig gekrümmten Steuerschlitzes.

...

0123219

Wenn der Eingriff des Haltezahns 15 in den Zahnkranz 14 der Steuerscheibe 13 in einem Augenblick zustandkommt, in welchem sich die Steuerscheibe, die als Schwungscheibe mit einer beträchtlichen Masse ausgerüstet ist, sich infolge einer Gurtabrollbewegung in rascher Rotation befindet, muß der Haltezahn infolge der raschen Stillsetzung der Steuerscheibe hohe Massenkräfte aufnehmen. Die Erfindung hat den Vorteil, daß der Haltezahn von einem Teil dieser Massenkräfte entlastet wird, weil die Steuerscheibe noch während des auf den Eingriff des Haltezahns unmittelbar folgenden Verriegelungsvorgangs zurückgedreht wird. Ein Teil der zuvor ausschließlich vom Haltezahn aufzunehmenden Massenkräfte wird daher im Falle der erfindungsgemäßen Steuerkurvenausführung über den Abschnitt 21 der Steuerkurve auf den Bolzen 9 und damit auf den Verriegelungsmechanismus abgeleitet. Der Haltezahn wird dadurch geschont.

Glawe, Delfs, Moll & Partner -      - Seite 01 23219

Patentanspruch

Sicherheitsgurtaufroller mit einem Sperrglied (6), das mittels
einer Steuerscheibe (13) aus einer sperrfreien Ruhestellung in
eine Stellung anfänglichen Eingriffs in ein Gegensperrglied
(4) bewegbar ist und aus dieser Anfangseingriffsstellung in
seine Sperrstellung mit maximalem Eingriff selbsttätig durch
die zu sperrende Relativdrehung des Gegensperrelements überführbar ist, wobei die mit einem Zahnkranz (14) zum Zusammenwirken mit einem Sensor (16) verbundene Steuerscheibe über
eine Steuerkurve (18) mit dem Sperrglied (6) zusammenwirkt,
dadurch gekennzeichnet, daß die Steuerkurve (18) im Anschluß
an den ersten, die Umsteuerung des Sperrglieds (6) aus der
Ruhestellung in die Anfangseingriffsstellung bewirkenden
ersten Kurvenabschnitts (20) einen zweiten Kurvenabschnitt
(21) mit solcher Richtung aufweist, daß die Bewegung des Sperrglieds (6) aus der Anfangseingriffsstellung in die Sperrstellung eine Rückstellung der Sperrscheibe (13) bewirkt.

0123219

Fig.1

Fig.2

Fig. 3